(19) Europäisches Patentamt
European Patent Office
Office européen des brevets

(11) EP 1 869 890 B1

## (12) EUROPÄISCHE PATENTSCHRIFT

(45) Veröffentlichungstag und Bekanntmachung des Hinweises auf die Patenterteilung:
**20.02.2013 Patentblatt 2013/08**

(51) Int Cl.:
***H04N 7/26*** *(2006.01)*

(21) Anmeldenummer: **06725548.9**

(22) Anmeldetag: **04.04.2006**

(86) Internationale Anmeldenummer:
**PCT/EP2006/061312**

(87) Internationale Veröffentlichungsnummer:
**WO 2006/108780 (19.10.2006 Gazette 2006/42)**

(54) **VERFAHREN UND VORRICHTUNG ZUR REDUKTION EINES QUANTISIERUNGSFEHLERS**

METHOD AND DEVICE FOR MINIMISING A QUANTISATION ERROR

PROCEDE ET DISPOSITIF DE REDUCTION D'UNE ERREUR DE QUANTIFICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.04.2005 DE 102005016858**

(43) Veröffentlichungstag der Anmeldung:
**26.12.2007 Patentblatt 2007/52**

(73) Patentinhaber: **SIEMENS AKTIENGESELLSCHAFT 80333 München (DE)**

(72) Erfinder:
• **AMON, Peter 81675 München (DE)**
• **KAPRALOV, Michael Orlando, Florida 32816-1364 (US)**

(56) Entgegenhaltungen:
• **SORIAL H ET AL: "Estimating Laplacian parameters of DCT coefficients for requantization in the transcoding of MPEG-2 video" IMAGE PROCESSING, 2000. PROCEEDINGS. 2000 INTERNATIONAL CONFERENCE ON SEPTEMBER 10-13, 2000, PISCATAWAY, NJ, USA,IEEE, 10. September 2000 (2000-09-10), Seiten 956-959, XP010530775 ISBN: 0-7803-6297-7**
• **PRICE J R ET AL: "Biased reconstruction for JPEG decoding" IEEE SIGNAL PROCESSING LETTERS, IEEE SERVICE CENTER, PISCATAWAY, NJ, US, Bd. 6, Nr. 12, Dezember 1999 (1999-12), Seiten 297-299, XP011060178 ISSN: 1070-9908**
• **KWANG-DEOK SEO ET AL: "Laplacian model-based inverse quantization for DCT-based image codec system" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23. Mai 2004 (2004-05-23), Seiten III-881, XP010719403 ISBN: 0-7803-8251-X**

EP 1 869 890 B1

**Beschreibung**

Die Erfindung betrifft ein Verfahren gemäß dem Oberbegriff des Anspruchs 1 und eine Vorrichtung gemäß dem Oberbegriff des Anspruchs 18.

Bei einer Kompression von Information wird zwischen verlustfreien und verlustbehafteten Kompressionstechniken unterschieden. Bei verlustfreien Kompressionstechniken, wie beispielsweise der Lempel-Ziv Codierung oder der Huffman Codierung, kann aus einer komprimierten Information die ursprüngliche, nicht-komprimierte Information ohne Fehler rekonstruiert werden. Derartige Verfahren erzielen nur dann eine hohe Kompressionsrate, wenn die zu komprimierende Information bestimmte Strukturen aufweist. Hingegen können mit Hilfe von verlustbehafteten Kompressionstechniken, wie beispielsweise dem JPEG-Verfahren (JPEG-Joint Picture Expert Group), dem MPEG2-Verfahren (MPEG-Motion Picture Expert Group) oder auch dem AAC-Verfahren (AAC-Adaptive Audio Coding), hohe Kompressionsrate erreicht werden. Hierbei muss jedoch in Kauf genommen werden, dass aus der komprimierten Information die ursprüngliche, nicht-komprimierte Information nicht fehlerfrei wiedergewonnen werden kann. Oftmals nehmen mit Zunahme der Kompressionsrate die Fehler in der dekomprimierten Information zu. So sind beispielsweise bei dem Bildkompressionsverfahren JPEG Block-Artefakte innerhalb des dekomprimierten Bildes sichtbar.

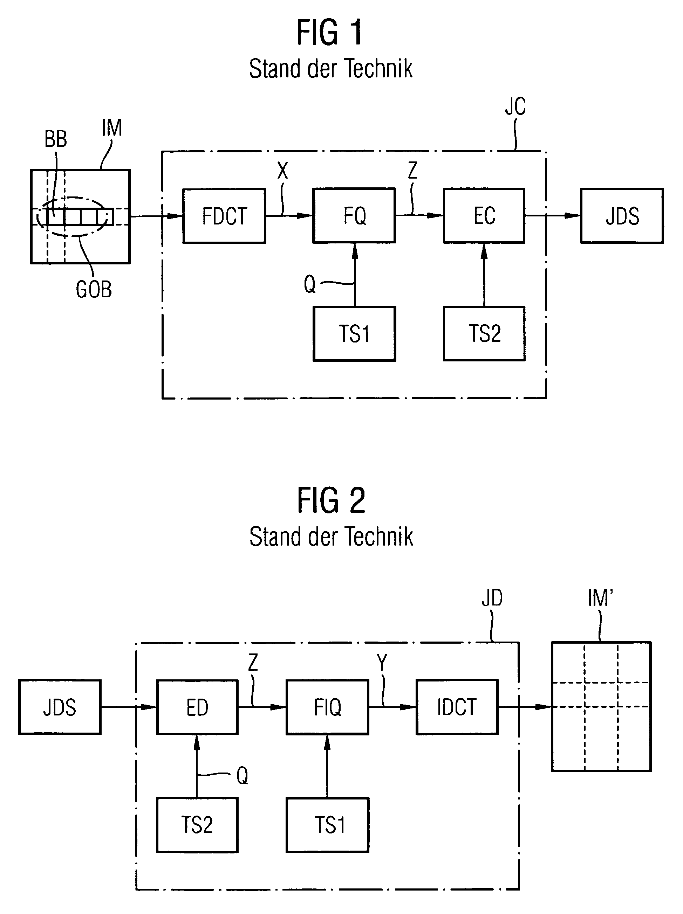

In Figur 1 ist exemplarisch eine vereinfachte Encodiereinheit eines JPEG-Encoders JC abgebildet. Hierbei wird ein zu komprimierendes Bild IM in Bildblöcke BB mit beispielsweise 8x8 Bildpunkten aufgeteilt. Die weitere Verarbeitung innerhalb des JPEG-Encoders JC basiert auf diesen Bildblöcken. Jeder Bildblock wird zuerst mittels der diskreten Cosinus-Transformation FDCT in den Frequenzraum transformiert. Dabei entstehen die Koeffizienten X. Jeder Koeffizient X wird einer Quantisierung FQ unterworfen, wobei die Quantisierung, d.h. der Quantisierungsfaktor Q, mittels der ersten Tabelle TS1 gesteuert wird. Hierbei wird der quantisierte Koeffizient Z generiert. Anschließend erfolgt eine Entropie-Codierung, z.B. eine Huffman-Codierung, mittels eines Entropie-Encoders EC, der mit Hilfe einer zweiten Tabelle TS2 gesteuert wird. Am Ausgang der Entropie-Codierung werden codierte Bilddaten in eine Datei JDS geschrieben.

Figur 2 zeigt beispielhaft eine vereinfachte Darstellung einer Decodiereinheit eines JPEG-Decoders JD. Die codierten Bilddaten werden aus der Datei JDS ausgelesen und dem Entropie-Decoder ED zur Entropie-Dekodierung zugeführt. Der Entropie-Decoder ED wird durch die zweite Tabelle TS2 gesteuert. Am Ausgang des Entropie-Decoders stehen die quantisierten Koeffizienten Z zur Verfügung. Diese werden anschließend mittels eines inversen Quantisierungsmoduls FIQ invers quantisiert, wobei die erste Tabelle TS1 die inverse Quantisierung steuert. Das inverse Quantisierungsmodul FIQ liefert rekonstruierte Koeffizienten Y. Schließlich werden diese mittels der inversen diskreten Cosinus Transformation IDCT vom Frequenz- in den Ortbereich transformiert und im rekonstrierten Bild IM' an der entsprechenden Ortsposition abgelegt.

Die Quantisierung ist eine oft eingesetzte Methode innerhalb verlustbehafteter Kompressionstechniken. Mit Hilfe der folgenden Gleichung kann die Funktion der Quantisierung dargestellt werden:

$$Z = \left\lfloor \frac{X}{Q} \right\rfloor \qquad\qquad (1)$$

wobei X den unquantisierten Wert bzw. Koeffizienten, Z den quantisierten Wert bzw. quantisierten Koeffizienten und Q den Quantisierungsfaktor darstellt. Der Ausdruck $\lfloor \rfloor$ kennzeichnet, dass alle Nachkommastellen gestrichen werden, d.h. Gleichung (1) beschreibt eine Division mit einem ganzzahligen Rechenergebnis.

Werden beispielsweise die Koeffizienten X mit 8-bit dargestellt, so kann der Koeffizient X einen Wert im Zahlenraum von 0 bis 255 annehmen. Durch die Quantisierung wird in Abhängigkeit des Quantisierungsfaktors Q eine Größe des Zahlenraums der quantisierten Koeffizienten Z reduziert. Ist z.B. der Quantisierungsfaktor Q=8 und wird die Gleichung (1) zur Berechnung der quantisierten Koeffizienten verwendet, so können die quantisierten Koeffizienten Z nur einen Zahlenwert von 0 bis 15 annehmen. Größere Quantisierungsfaktoren Q bewirken eine Vergrößerung der Kompressionsrate.

Zur Rekonstruktion des ursprünglich unquantisierten Koeffizientens X kann folgende zweite Gleichung benutzt werden:

$$Y = Z * Q \qquad\qquad (2)$$

wobei diese Gleichung einer inversen Quantisierung entspricht und das Bezugszeichen Y den rekonstruierten Wert bzw. rekonstruierten Koeffizienten darstellt.

Durch Streichung der Nachkommerstellen in Gleichung (1) geht Information verloren, so dass oftmals der rekonstruierte Koeffizient Y nicht mit dem Koeffizienten X übereinstimmt, d.h. Y●X. In diesem Fall ergibt sich ein erster Quantisierungsfehler QF1, der beispielsweise mittels der folgenden Gleichung zahlenmäßig ermittelt werden kann:

$$QF1 = (X - Y)^2 = (X - Q*Z)^2 = \left( X - Q*\left\lfloor \frac{X}{Q} \right\rfloor \right)^2 \quad (3)$$

Gleichung (3) stellt lediglich eine mögliche Berechnungsart für den ersten Quantisierungsfehler QF1 dar. Für weitere Ausführungen wird beispielsweise auf die Literatur [1] Kapitel 2.2.1.2 verwiesen.

Zur Reduzierung des ersten Quantisierungsfehlers QF1 kann innerhalb der inversen Quantisierung ein Korrekturwert eingeführt werden. Hierzu werden zwei Beispiele näher dargestellt. Durch die Gleichung

$$Y = \left( Z + \frac{1}{2} \right) * Q \quad\quad\quad\quad (4)$$

wird der Quantisierungsfehler reduziert. Jedoch liefert die Gleichung (4) nur für gleichverteilte Koeffizienten X innerhalb des durch den Quantisierungsfaktor Q bestimmten Quantisierungsintervals einen niedrigern Quantisierungsfehler. Bei nicht-gleichverteilten Koeffizienten X liefert die Gleichung (4) keinen minimalen Quantisierungsfehler.

Ein zweites Beispiel wird durch die Gleichung

$$Y = (Z + KW) * Q \quad\quad\quad\quad (5)$$

beschrieben. Hierbei wird durch einen Korrekturwert KW eine Anpassung an nicht-gleichverteilte Koeffizienten X erzielt. Aus der Videocodier-Software, die mit dem Dokument [2] ausgeliefert wird, ist beispielsweise bekannt, für INTRA und INTER-codierte Koeffizienten X den Korrekturwert KW=1/3 und für RESIDUAL-codierte Koeffizienten X den Korrekturwert KW=1/6 fest einzustellen. Unter dem Bergriff RESIDUAL-Codierung ist beispielsweise eine bidirektionale Codierung zu verstehen.

Sorial H et al: "Estimating Laplacian parameters of DCT coefficients for requantization in the transcoding of MPEG-2 video" beschreibt eine Methode um Fehler bei einer wiederholten Quantisierung während einer Transcodierung zu vermeiden.

Ein Dokument Price J R et al: "Biased reconstruction for JPEG decoding" befasst sich mit einer Rekonstruktion von JPEG Daten unter Berücksichtigung einer Schätzung einer Laplace-Verteilung.

Ferner beschäftigt sich ein Dokument Kwang-Deok Seo et al: "Laplacian model-based inverse quantization for DCT-based image codec system" mit einer auf Basis eines Laplace Modells durchgeführten inversen Quantisierung für DCT-basierte Imagecodiersysteme.

Der Erfindung liegt die Aufgabe zugrunde, ein Verfahren und eine Vorrichtung anzugeben, das bzw. die einen Quantisierungsfehler bei einem Kompressionsverfahren gegenüber dem Stand der Technik in einfacher Weise reduziert.

Diese Aufgabe wird ausgehend von dem Verfahren gemäß dem Oberbegriff der Ansprüche 1 und 2 durch deren Merkmale gelöst. Ferner wird diese Aufgabe ausgehend von der Vorrichtung gemäß dem Oberbegriff der Ansprüche 17 und 18 durch deren kennzeichnende Merkmale gelöst.

Sonstige Weiterbildungen der Erfindung sind in den Unteransprüchen wiedergegeben.

Bei dem Verfahren zur Reduktion eines Quantisierungsfehlers bei einer inversen Quantisierung eines quantisierten Koeffizienten im Rahmen eines Kompressionsverfahrens, wobei der Quantisierungsfehler einen Unterschied zwischen dem quantisierten Koeffizienten nach der inversen Quantisierung und einem dazugehörigen Koeffizienten vor einer Quantisierung beschreibt, wird mindestens ein für die Kompression des quantisierten Koeffizienten charakteristischer Parameter ausgewählt, wobei zumindest zwei charakteristische Parameter ausgewählt werden, falls einer der beiden charakteristischen Parameter einem zeitlichen Prädiktionsmodus entspricht, in Abhängigkeit des zumindest einen ausgewählten charakteristischen Parameters ein Korrekturwert selektiert, die inverse Quantisierung nach Addition des Korrekturwerts und des quantisierten Koeffizienten ausgeführt.

Durch die Verwendung mindestens eines charakteristischen Parameters zur Auswahl des Korrekturwerts kann ein optimaler Korrekturwert gefunden werden, der statistische Eigenschaften des mindestens einen charakteristischen Parameters bezüglich der quantisierten Koeffizienten berücksichtigt und somit einen geringeren Quantisierungsfehler ergibt als ohne diese Berücksichtigung. Ferner kann durch die Berücksichtigung mehrerer charakteristischer Parameter ein jeweiliger optimaler Korrekturwert gefunden werden, der für einen quantisierten Koeffizienten, der mit diesen charakteristischen Parametern codiert wird, einen sehr geringen Quantisierungsfehler ergibt. Im Allgemeinen nimmt der Quantisierungsfehler bei Zunahme der berücksichtigten charakteristischen Parameter ab. Ferner kann die Ermittlung des bzw. der optimalen Korrekturwerte offline durchgeführt werden, so dass während des Durchführens des Kompressionsverfahrens ein geringer Verarbeitungsaufwand zum Selektieren des Korrekturwerts benötigt wird. Offline bedeutet in diesem Zusammenhang, dass insbesondere mit Hilfe einer oder mehrerer Testsequenzen für einen oder mehrere charakteristische Parameter optimale Korrekturwerte ermittelt werden. Diese ermittelten optimalen Korrekturwerte können dann bei der inversen Quantisierung des quantisierten Koeffizienten zur schnellen Ermittlung des Korrekturwerts herangezogen werden. Der geringe Verarbeitungsaufwand ist insbesondere bei kleinen Geräten, wie z.B. bei Mobilfunktelefonen, von großem Vorteil, da dies einen niedrigen Stromverbrauch nach sich zieht.

Vorzugsweise werden als charakteristische Parameter der quantisierte Koeffizient, ein Quantisierungsfaktor, eine Blockgröße eines Blocks, wobei ein Block mehrere quantisierte Koeffizienten beinhaltet und dieser Block mit der Blockgröße den quantisierten Koeffizient umfasst, zumindest ein Frequenzwert, wobei der quantisierte Koeffizient eine Amplitude des zumindest einen Frequenzwerts repräsentiert, und/oder der zeitliche Prädiktionsmodus, insbesondere ein INTRA-Prädiktionsmodus, ein INTER-Prädiktionsmodus und/oder ein RESIDUAL-Präditionsmodus, berücksichtigt. Durch Verwendung eines oder mehrerer dieser charakteristischer Parameter können Korrekturwerte optimal an Codiereigenschaften des quantisierten Koeffizienten angepasst werden.

In einer alternativen Ausführungsform wird eine Schätzfunktion in Abhängigkeit von mindestens einem charakteristischen Parameter für zumindest einen Korrekturwert, insbesondere auf Basis zumindest einer Testsequenz, erzeugt und im Kompressionsverfahren der Korrekturwert mittels der Schätzfunktion ermittelt. Hierdurch wird eine Vereinfachung bei der Selektion des Korrekturwerts erreicht, da der Korrekturwert aus der Schätzfunktion entnommen werden kann. Werden ferner unterschiedliche Schätzfunktionen für mindestens zwei charakteristische Parameter eingesetzt, so kann jede Schätzfunktion exakter an die statistischen Eigenschaften der verwendeten charakteristischen Parameter angepasst werden. Bei der Videocodierung hat sich als Schätzfunktion eine Laplace-Funktion als gut herausgestellt, da diese die Verteilung der quantisierten Koeffizienten gut approximiert.

Wird ferner der Korrekturwert mit einer anderen Methode als der Schätzfunktion ermittelt, unter Verwendung einer Schätzfunktion ein Schätzwert für den Korrekturwert generiert, ein Unterschiedswert aus Korrekturwert und Schätzwert erzeugt und der erzeugte Unterschiedswerts von einer Encodiereinrichtung des Kompressionsverfahrens an eine Decodiervorrichtung des Kompressionsverfahrens übermittelt, so wird eine zu übertragende Datenmenge zur Signalisierung der Korrekturwerte gering gehalten, da lediglich Unterschiedswerte übertragen werden.

Vorzugsweise werden mehrere Korrekturwerte oder Unterschiedswerte von einer Encodiereinrichtung des Kompressionsverfahrens an eine Decodiervorrichtung des Kompressionsverfahrens übermittelt. Dabei wird nicht nur ein Korrekturwert einem charakteristischen Parameter zugewiesen, sondern in Abhängigkeit vom Wert des charakteristischen Parameters kann ein optimierter Korrekturwert ausgewählt werden.

Wird ferner vor der Übertragung eine stückweise Linearisierung der Korrekturwerte und/oder Unterschiedswerte in Abhängigkeit des zumindest einen charakteristischen Parameters durchgeführt, so kann die zu übertragende Datenmenge für die Korrekturwert und Unterschiedswerte weiter reduziert werden.

Vorzugsweise wird aufgrund der Auswahl mindestens eines charakteristischen Parameters ein Korrekturwert derart ermittelt, dass der Quantisierungsfehler einer Koeffizientengruppe quantisierter Koeffizienten mit den charakteristischen Parametern der Auswahl minimiert wird, wobei die jeweilige inverse Quantisierung nach einer Addition des Korrekturwerts und des quantisierten Koeffizienten der Koeffizientengruppe erfolgt. Mit dieser Erweiterung kann ein nahezu optimaler Korrekturwert bestimmt werden. Wird ferner eine Koeffizientengruppe zu einem Zeitpunkt neu erstellt, wobei dieser Zeitpunkt durch fest vorgegebene Zeitpunkte oder durch eine Anzahl bereits quantisierter Koeffizienten bestimmt wird, so kann der Korrekturwert für eine Koeffizientengruppe in Abhängigkeit von bereits verarbeiteten quantisierten Koeffizienten angepasst werden und damit wird der Quantisierungsfehler weiter reduziert.

Vorzugsweise wird als Kompressionsverfahren ein Videocodierverfahren, insbesondere nach H.264 Standard, ausgewählt, da gerade bei dem Videocodierverfahren eine Anwendung des erfindungsgemäßen Verfahrens eine deutliche Bildqualitätsverbesserung erreicht werden kann.

Ferner wird die Koeffizientengruppe der quantisierten Koeffizienten aus zumindest einem Bildblock oder zumindest einer Gruppe von Bildblöcken oder zumindest einem Bild entnommen. Dadurch kann für die durch das Kompressionsverfahren, z.B. Videocodierverfahren, vorgegebenen Codierungsstrukturen eine Koeffizientengruppe und der dazugehörige optimale Korrekturwert ermittelt und ein jeweiliger Quantisierungsfehler minimal gehalten werden.

Ferner betrifft die Erfindung eine Vorrichtung zur Reduktion eines Quantisierungsfehlers bei einer inversen Quantisierung eines quantisierten Koeffizienten im Rahmen eines Kompressionsverfahrens, wobei der Quantisierungsfehler einen Unterschied zwischen dem quantisierten Koeffizienten nach der inversen Quantisierung und einem dazugehörigen Koeffizienten vor einer Quantisierung beschreibt, bei der eine Korrekturwerteinheit derart ausgestaltet ist, dass mindestens ein für die Kompression des quantisierten Koeffizienten charakteristischer Parameter ausgewählt wird, wobei zumindest zwei charakteristische Parameter ausgewählt werden, falls einer der beiden charakteristischen Parameter einem zeitlichen Prädiktionsmodus entspricht, in Abhängigkeit des zumindest einen ausgewählten charakteristischen Parameters ein Korrekturwert selektiert wird, die inverse Quantisierung nach Addition des Korrekturwerts und des quantisierten Koeffizienten ausgeführt wird. Durch die Vorrichtung wird es ermöglicht, das erfindungsgemäße Verfahren zu implementieren und auszuführen. Vorzugsweise ist die Vorrichtung ausgestattet mit einer Korrekturwertanalyseeinheit, die derart ausgestaltet ist, dass aufgrund der Auswahl mindestens eines charakteristischen Parameters ein Korrekturwert derart ermittelt wird, dass der Quantisierungsfehler einer Koeffizientengruppe quantisierter Koeffizienten mit den charakteristischen Parametern der Auswahl minimiert wird, wobei die jeweilige inverse Quantisierung nach einer Addition des Korrekturwerts und des quantisierten Koeffizienten der Koeffizientengruppe erfolgt. Durch den Einsatz der Korrekturwertanalyseeinheit wird ein minimaler Korrekturwert durch Bildung von einer Koeffizientengruppe erzielt, wobei die quantisierten Koeffizienten der Koeffizientengruppe mit den gleichen charakteristischen Parametern codiert worden sind, wie derjenige quantisierte Koeffizient für den der optimale Korrekturwert ermittelt werden soll. Durch Bildung der Koeffizientengruppe wird erreicht, dass ein oder mehrere Korrekturwerte generiert werden, der bzw. die für alle quantisierten Koeffizienten innerhalb der Koeffizientengruppe die optimalen Korrekturwerte darstellen.

Die Erfindung und ihre Weiterbildungen werden nachfolgend anhand von Zeichnungen näher erläutert.

Es zeigen:

Figur 1    schematischer Aufbau eines JPEG-Encoders (Stand der Technik);

Figur 2    schematischer Aufbau eines JPEG-Decoders (Stand der Technik);

Figur 3    modifizierter Aufbau eines JPEG-Encoders zur Erzeugung von Korrekturenwerten für das erfindungsgemäße Verfahren;

Figur 4    Darstellung von optimierten Korrekturwerten in Abhängigkeit von Quantisierungsstufen;

Figur 5    modifizierter Aufbau eines JPEG-Decoders zur Durchführung des erfindungsgemäßen Verfahrens unter Berücksichtigung von Korrekturwerten;

Figur 6    Darstellung von optimalen Korrekturenwerten in Abhängigkeit von quantisierten Koeffizienten und Quantisierungsfaktoren;

Figur 7    Darstellung von normierten Unterschiedswerten in Abhängigkeit von Quantisierungsfaktoren;

Figur 8    Darstellung einer jeweiligen Bildqualität zweier codierter Videosignale;

Figur 9    System mit Videoserver und einem mobilen Endgerät zur Durchführung des erfindungsgemäßen Verfahrens.

Elemente mit gleicher Funktion und Wirkungsweise sind in den Figuren 1 mit 9 mit denselben Bezugszeichen versehen.

Die Figuren 1 und 2 sind in der Einleitung ausführlich gewürdigt worden, so dass an dieser Stelle auf diese Figuren nicht näher eingegangen wird.

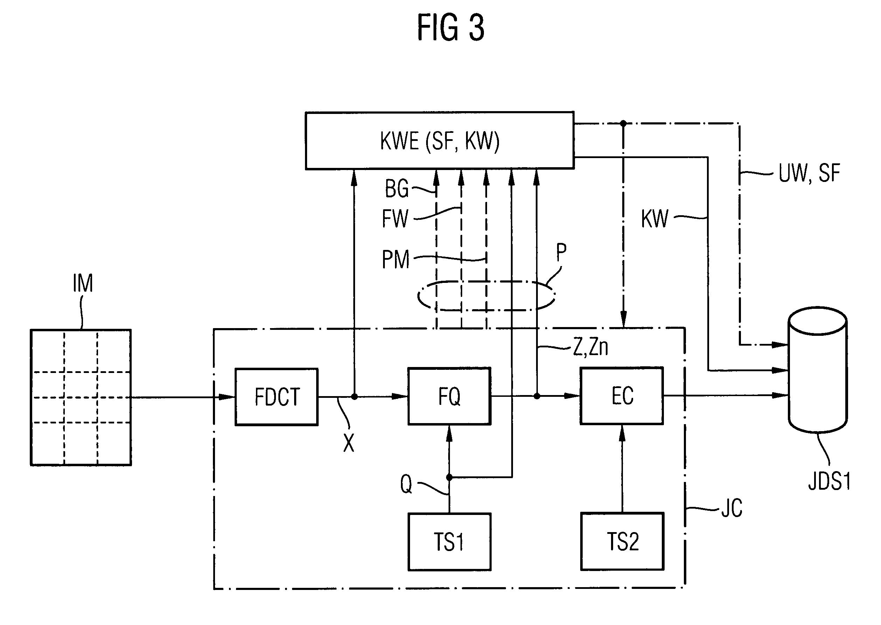

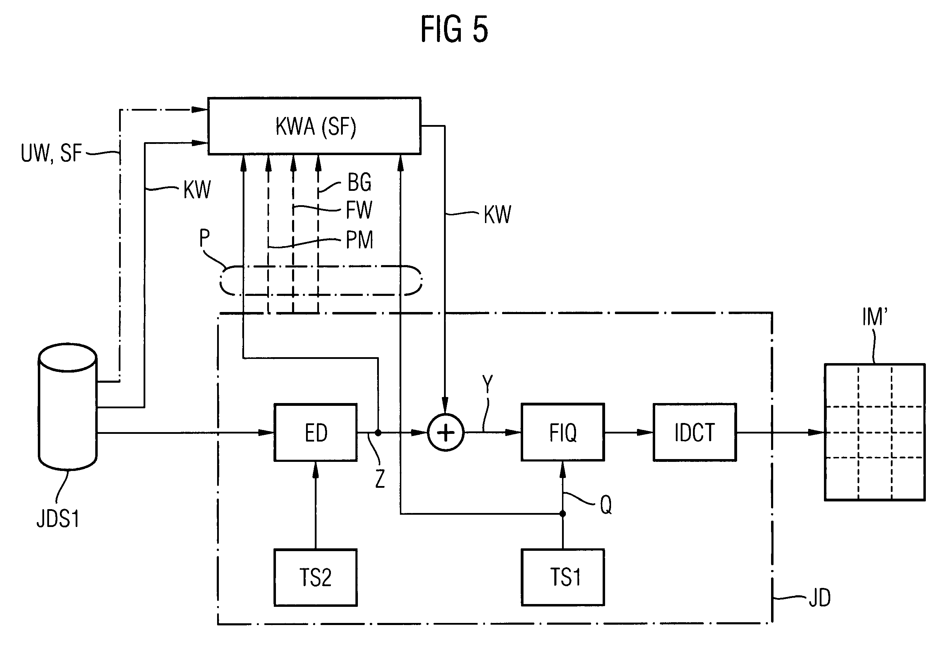

Mit Hilfe von Figur 3 und 5 wird das erfindungsgemäße Verfahren näher erläutert. Figur 3 basiert auf Figur 1, wobei eine Korrekturwerteinheit KWE ergänzt worden ist. In Figur 3 werden aus einem Bild IM komprimierte Daten generiert, die in einer ersten Datei JDS1 gespeichert werden. Bei der Quantisierung mit dem Quantisierungsfaktor Q wird für jeden Koeffizienten X ein quantisierter Koeffizient Z erzeugt. Dabei werden als Koeffizientensatz der Quantisierungsfaktor Q, der Koeffizienten X und der quantisierte Koeffizienten Z der Korrekturwerteinheit KWE zugeführt. Die Korrekturwerteinheit KWE speichert beispielsweise einen ersten Quantisierungsfehler QF1, der aus $QF1=(X-Z*Q)^2$ erzeugt wird. Ferner werden zu jedem ersten Quantisierungsfehler QF1 der dabei verwendete Quantisierungsfaktor Q gespeichert. Die folgende Tabelle zeigt dies exemplarisch anhand von fünf Koeffizientensätzen, wobei diese Koeffizientensätze mit einer Nummer von 1 bis 5 nummeriert sind:

| Nr. | X | Z | Q | QF1 | KW | Y |
|---|---|---|---|---|---|---|
| 1 | 100 | 12 | 8 | 16 | 5/16 | 98,5 |
| 2 | 117 | 23 | 5 | 4 | 2/5 | 117 |
| 3 | 37 | 7 | 5 | 4 | 2/5 | 37 |
| 4 | 47 | 15 | 3 | 4 | 2/3 | 47 |
| 5 | 105 | 13 | 8 | 1 | 5/16 | 106,5 |

Ist beispielsweise der Koeffizient X=100 und der Quantisierungsfaktor Q=8, so ergibt sich der quantisierte Koeffizient Z=12 und der erste Quantisierungsfehler QF1=16. Im Folgenden ermittelt die Korrekturwerteinheit KWE einen Korrekturwert KW, der einen Quantisierungsfehler QF nach der inversen Quantisierung unter Verwendung der Gleichung (5) minimiert. Berücksichtigt man den Korrekturwert KW bei der Berechnung so ergibt sich ein Quantisierungsfehler QF:

$$QF = (X - Y)^2 = (X - Q * (Z + KW))^2 = (X - Q * Z - KW * Q)^2 \qquad (6)$$

Zur Ermittlung des optimalen Korrekturwerts KW wird die Gleichung (6) in Abhängigkeit des Korrekturwerts minimiert, z.B. nach dem Korrekturwert KW abgeleitet und zu Null gesetzt, d.h.

$$QF' = 2 * (X - Q * Z - KW * Q) * (-Q) = 2 * (\sqrt{QF1} - Q * KW) * (-Q) = 0 \qquad (7)$$

Soll der Quantisierungsfehler QF für den Korrekturwert KW für mehr als einen Koeffizientensatz ermittelt werden, so werden die abgeleiteten Quantisierungsfehler QF' der jeweiligen Koeffizientensätze zusammenaddiert und das Addierungsergebnis zu Null gesetzt. Diejenigen quantisierten Koeffizienten, die bei dieser Berechnung berücksichtigt werden, werden in einer Koeffizientengruppe G zusammengefasst. Die quantisierten Koeffizienten der Koeffizientengruppe G werden mit dem Bezugszeichen Zn bezeichnet. Unter Verwendung der Gleichung (7) beträgt beispielsweise für den vierten Koeffizientensatz mit dem Quantisierungsfaktor Q=3 der optimale Korrekturwert KW = 2/3. Für den ersten und fünften Koeffizientensatz mit dem Quantisierungsfaktor Q=8 beträgt der gemeinsame optimale Korrekturwert KW=5/16. In obiger Tabelle sind die optimalen Korrekturwerte KW eingetragen worden. Die ermittelten optimalen Korrekturwerte KW werden beispielsweise in der ersten Datei JDS1 gespeichert werden. Dieser bzw. diese Korrekturwerte KW werden als optimal bezeichnet, da sie minimale Quantisierungsfehler QF gemäß der Gleichung (7) erreichen. Die vorliegende Erfindung ist nicht beschränkt auf die Verwendung der Gleichungen (6) und (7) zur Ermittlung des/der optimalen Korrekturwerte KW. Vielmehr kann dafür jede Optimierungsmethode, wie z.B. das Ausprobieren verschiedener Korrekturwerte KW, benutzt werden. Auch können für die Generierung der Korrekturwerte KW für jede Quantisierungsstufe Q unterschiedliche Optimierungsmethoden angewandt werden. Dies gilt analog für den Fall, dass andere charakteristische Parameter P als die Quantisierungsstufe Q benutzt wird.

In einer alternativen Ausführungsform kann ein optimaler Korrekturwert KW für alle Quantisierungsfaktoren Q ermittelt werden, in dem die abgeleiteten Quantisierungsfehler QF' der jeweiligen Koeffizientensätze zusammenaddiert und das Ergebnis zu Null gesetzt wird. Für das obige Ausführungsbeispiel ergibt sich der Korrekturwert KW=6/17.

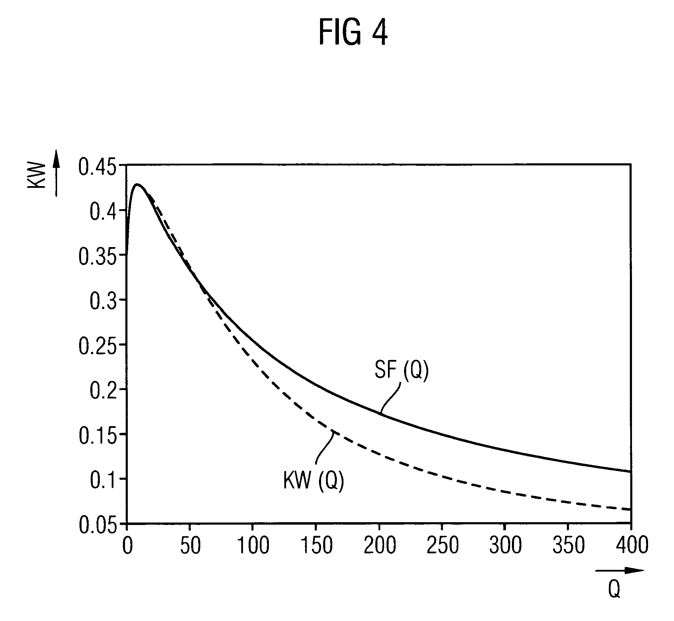

In Figur 4 ist exemplarisch eine Funktion optimaler Korrekturwerte KW über dem Quantisierungsfaktor Q aufgetragen. Diese Funktion ist in Figur 4 mit dem Bezugszeichen KW(Q) gekennzeichnet.

In Figur 5 ist eine Decodiereinheit zu sehen, die auf der Decodiereinheit gemäß Figur 2 basiert. Hierbei werden zusätzlich zur Figur 2 ein oder mehrere Korrekturwerte KW aus der ersten Daten JDS1 bei der Decodierung der codierten Bilddaten ausgelesen, z.B. durch eine Korrekturwertanalyseeinheit KWA. Vor der inversen Quantisierung durch das inverse Quantisierungsmodul FIQ wird dem quantisierten Koeffizienten Z der dazugehörige Korrekturwert KW hinzuaddiert. Danach erfolgt die inverse Quantisierung. In einer alternativen Ausführungsform kann erst nach der inversen Quantisierung der Wert KW*Q dem rekonstruierten Koeffizienten Y hinzuaddiert werden. Somit ergibt sich der rekonstruierte Koeffizient Y=Z*Q+KW*Q. In obiger Tabelle sind die mit den optimalen Korrekturwerten KW rekonstruierten Koeffizienten Y aufgenommen worden.

In den Beispielen gemäß Figur 3 bzw. 5 sind die optimalen Korrekturwerte KW unter Berücksichtigung des jeweiligen Quantisierungsfaktors Q ermittelt worden. Hierbei liegt die Erkenntnis zugrunde, dass sich eine Häufigkeitsverteilung der Koeffizienten X je nach Quantisierungsfaktor Q verändert und somit mittels eines jedem Quantisierungsfaktor Q dazugehörigen Korrekturwerts KW ein minimaler Quantisierungsfehler QF erzielt werden kann. Der Quantisierungsfaktor Q stellt lediglich eines der möglichen charakteristischen Parameter P dar, die bei der Ermittlung des bzw. der optimalen Korrekturwerte KW in Betracht gezogen werden kann. Alternativ wird beispielsweise anstelle des Quantisierungsfaktors Q der quantisierte Koeffizient Z als charakteristischer Parameter P berücksichtigt. Dabei kann für einen oder mehrere quantisierte Koeffizienten Z eine jeweilige Koeffizientengruppe G gebildet und für jede Koeffizientengruppe G ein optimaler Korrekturwert KW generiert werden. Beispielsweise werden die quantisierten Koeffizienten Z im Wertebereich von 0 bis 9 und im Bereich von 10-20 in zwei separate Koeffizientengruppe G eingeteilt und für jede Koeffizientengruppe G ein optimaler Korrekturwert KW berechnet.

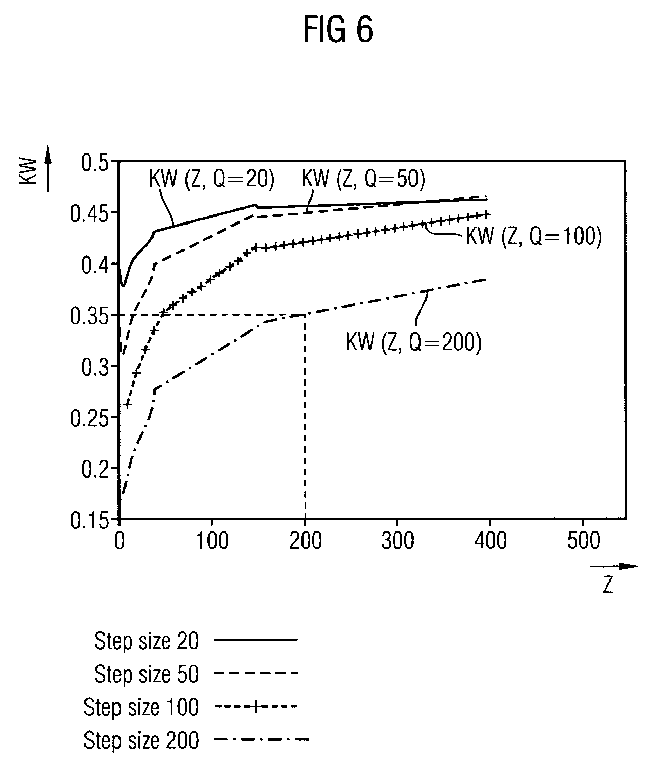

In einer weiteren Variante des erfindungsgemäßen Verfahrens werden zumindest zwei charakteristische Parameter P zur Bildung der Koeffizientengruppe G und somit zur Ermittlung des bzw. der optimalen Korrekturwerte KW verwendet. In Figur 6 ist für die Quantisierungsfaktoren Q=20, Q=50, Q=100 und Q=200 jeweils eine Funktion optimaler Korrekturwerte KW in Abhängigkeit vom quantisierten Koeffizienten Z ermittelt worden. Eine derartige Funktion ist in Figur 6 beispielsweise mit KW (Z, Q=200) bezeichnet, wobei dieser Ausdruck angibt, dass bei einem Quantisierungsfaktor Q=200 der optimale Korrekturwert KW in Abhängigkeit von dem quantisierten Koeffizienten Z aus dieser Funktion abgelesen werden kann. So ergibt sich der optimale Korrekturwert KW für den Quantisierungsfaktor Q=200 und den quantisierten Koeffizienten Z=200 zu KW=KW(Z=200, Q=200) = 0,35. Bei Verwendung mehrerer charakteristischer Parameter P kann z.B. ein Lagrange-Verfahren zur Ermittlung des optimalen Korrekturwerts KW herangezogen werden.

Das erfindungsgemäße Verfahren wird beispielsweise bei einem Videocodierverfahren verwendet. Dabei können neben dem Quantisierungsfaktor Q und/oder dem quantisierten Koeffizienten Z auch folgende charakteristischen Parameter P zur Ermittlung des optimalen Korrekturwerts KW zusätzlich und/oder alternativ benutzt werden.

- Blockgröße BG:

  In blockbasierten Videocodierverfahren werden Bilddaten in Bildblöcke mit einer Blockgröße BG von z.B. 4x4, 8x8 oder 16x16 Bildpunkten eingeteilt. In Abhängigkeit von der Blockgröße BG des Bildblocks BB, in dem sich der quantisierte Koeffizient Z befindet, kann ein optimaler Korrekturwert KW für den quantisierten Koeffizienten Z gefunden werden.

- Frequenzwert FW:

  In einem blockbasierten Kompressionsverfahren, wie z.B. JPEG oder H.264, werden Bildblöcke einer Größe von 8x8 Bildpunkten vom Orts- in den Frequenzbereich bzw. vom Frequenz- in den Ortbereich transformiert. In Figur 1 wird dies durch die diskrete Cosinus-Transformation FDCT bzw. die inverse Cosinus-Transformation IDCT bewerkstelligt. Dabei repräsentiert jeder Koeffizient X und somit auch der dazugehörige quantisierte Koeffizient Z innerhalb des transformierten Bildblocks einen spezifischen zweidimensionalen Frequenzwert FW, wobei die Amplitude des Frequenzwerts FW dem Koeffizienten X entspricht. So wird beispielsweise für jeden Frequenzwert FW ein dazugehöriger optimaler Korrekturwert KW erstellt. Ferner kann eine Gruppe G quantisierter Koeffizienten Z aus mehreren Frequenzwerten FW gebildet werden. So wird beispielsweise für den Frequenzwert FW mit einem Gleichanteil DC und für alle anderen Frequenzwerte FW, d.h. für die nicht-Gleichanteile AC, jeweils ein eigener optimaler Korrekturwert KW erzeugt.

- Zeitlicher Prädiktionsmodus PM:

  Bei Kompressionsverfahren kann zur Steigerung der Kompressionsrate eine zeitliche Prädiktion benutzt werden. Dem Fachmann sind derartige zeitliche Prädiktionen als INTRA-Prädiktionsmodus INTRA, INTER-Prädiktionsmodus INTER und RESIDUAL-Prädiktionsmodus RES beispielsweise aus [1] oder [2] bekannt, so dass auf deren Funktionsweise nicht weiter eingegangen wird. So wird beispielsweise der Koeffizient X mittels des INTER-Prädiktionsmodus codiert. Bei der Ermittlung des optimalen Korrekturwerts KW wird als charakteristischer Parameter P der Inter-Prädiktionsmodus gewählt.

Im folgenden Beispiel wird auf Basis von drei charakteristischen Parametern P jeweils ein optimaler Korrekturwert KW zugeordnet.

| PM | FW | BG | KW |
|---|---|---|---|
| INTRA | DC | 4x4 | 0,43 |
| INTRA | AC | 4x4 | 0,27 |
| INTRA | AC | 16x16 | 0,33 |
| INTER | DC | 4x4 | 0,12 |
| INTER | AC | 4x4 | 0,22 |
| INTER | AC | 16x16 | 0,55 |
| RES | DC | 4x4 | 0,05 |
| RES | AC | 4x4 | 0,30 |

Diese Tabelle mit Korrekturwerten KW gibt an, dass beispielsweise ein quantisierter Koeffizient Z, der mit den charakteristischen Parametern P "INTRA AC 16x16" codiert worden ist, mit dem Korrekturwert KW=0,33 invers quantisiert wird. Sollte für einen quantisierten Koeffizienten Z kein entsprechender Eintrag in dieser Tabelle gefunden werden, so wird diejenige Kombination an charakteristischen Parametern P aus der Tabelle ausgewählt, die den charakteristischen Parametern P des quantisierten Koeffizienten Z am nächsten kommt. Wurde der quantisierte Koeffizient Z beispielsweise mit "INTER AC 4x8" codiert, so könnte die Kombination "INTER AC 4x4", die der "INTER AC 4x8" am nächsten kommt ausgewählt und der Korrekturwert zu KW=0,22 bestimmt werden.

Ferner kann es zweckmäßig sein, dass ein charakteristischer Parameter P, z.B. der zeitliche Prädiktionsmodus PM, nicht alleine sondern nur in Kombination mit einem weiteren charakteristischen Parameter P, z.B. der Blockgröße BG, verwendet wird.

In den bisherigen Beispielen ist der Korrekturwert KW bei der inversen Quantisierung in der Decodiereinheit eingesetzt worden. Viele Kompressionsverfahren, wie beispielsweise der Videocodierstandard MPEG-4, decodieren die codierten Bilddaten, um im Rahmen des INTER-Prädiktionsmodus auf zeitlich vorangegangene Bilder zurückgreifen zu können. In diesem Fall wird auch eine inverse Quantisierung des quantisierten Koeffizienten Z durchgeführt. Dabei kann auch das erfindungsgemäße Verfahren benutzt werden, jedoch sollte gewährleistet werden, dass die Encodiereinheit und die Decodiereinheit bei der inversen Quantisierung eines speziellen quantisierten Koeffizienten Z den gleichen Korrekturwert KW verwenden. Ansonsten arbeiten Encodiereinheit und Decodiereinheit nicht synchron und das Kommpresionsverfahren liefert fehlerhaft decodierte Bilder IM'.

Im Folgenden wird die Bildung der Koeffizientengruppe G näher erläutert. Im Ausführungsbeispiel gemäß Figur 3 wird zunächst das Bild IM vollständig codiert. Danach werden eine oder mehrere Koeffizientengruppen G gebildet, wobei jede Koeffizientengruppe G quantisierte Koeffizienten Zn mit zumindest einem charakteristischen Parameter P betrachtet. So werden beispielsweise alle quantisierten Koeffizienten mit dem Quantisierungsfaktor Q=5 zu einer Koeffizientengruppe G zusammengefasst und für diese Koeffizientengruppe G der Quantisierungsfehler QF minimiert bzw. ein optimaler Korrekturwert KW ermittelt. Anstelle alle quantisierten Koeffizienten zu berücksichtigen können nur bestimmte quantisierte Koeffizienten zur Bildung einer oder mehrerer Koeffizientengruppen G betrachtet werden. So können die quantisierten Koeffizienten Zn zumindest eines Bildblocks BB, und/oder zumindest einer Gruppe GOB von Bildblöcken und/oder zumindest eines Bildes IM in Betracht gezogen werden.

Ferner kann es in der Praxis zweckmäßig sein, während der Durchführung eines Kompressionsverfahrens zumindest eine Koeffizientengruppe G neu zu erstellen und für diese neu erstelle Koeffizientengruppe G den Quantisierungsfehler QF zu minimieren bzw. einen oder mehrere optimierte Korrekturwerte KW zu errechnen. Ein Zeitpunkt, an dem dies durchgeführt wird, hängt beispielsweise von einer Anzahl bereits quantisierter Koeffizienten Z ab oder wird zu fest vorgegebenen Zeitpunkten TO durchgeführt.

In einer alternativen Ausführungsform des erfindungsgemäßen Verfahrens wird zur Selektion des Korrekturwerts KW eine Schätzfunktion SF eingesetzt. Diese Schätzfunktion SF hat die Aufgabe, dass ein Korrekturwert KW aus dieser Schätzfunktion SF gewonnen werden kann. Beispielsweise soll eine Schätzfunktion SF für den charakteristischen Parameter P Blockgröße BG mit den Größen 4x4, 8x8 und 16x16 für das Videokompressionsverfahren H.264 benutzt werden. Zur Ermittlung dieser Schätzfunktion SF werden offline beispielsweise mit Hilfe einer oder mehrere Testsequenzen mit den Blockgrößen BG 4x4, 8x8 und 16x16 codiert und für jede dieser Blöckgrößen eine Koeffizientengruppe G aus den quantisierten Koeffizienten Z dieser Testsequenzen gebildet. Danach wird für jede dieser Koeffizientengruppe G der optimale Korrekturwert KW ermittelt, z.B. KW(BG=4x4)=0,7, KW(BG=8x8)=0.5 und KW(BG=16x16)=0.2. Die Schätzfunktion SF gibt somit an den Stellen BG=4x4, BG=8x8 und BG=16x16 dazugehörige optimale Korrekturwert KW wieder. Diese Schätzfunktion SF wird in der En- und/oder Decodiereinheit abgelegt und kann für die En- und/oder Decodierung zur Selektion eines Korrekturwerts KW bei der Durchführung eines Kompressionsverfahrens eingesetzt werden. Hierbei ist vorteilhaft, dass die Ermittlung der Schätzfunktion SF offline durchgeführt werden kann. Ferner ist die Verwendung der Schätzfunktion SF von Vorteil, da im Vergleich zu den Ausführungsbeispielen gemäß Figur 3 und Figur 5 eine Übermittlung des bzw. der Korrekturwerte KW unterbleiben kann, da sowohl die En- als auch Decodiereinheit den Korrekturwert KW aus der Schätzfunktion SF gewinnen können.

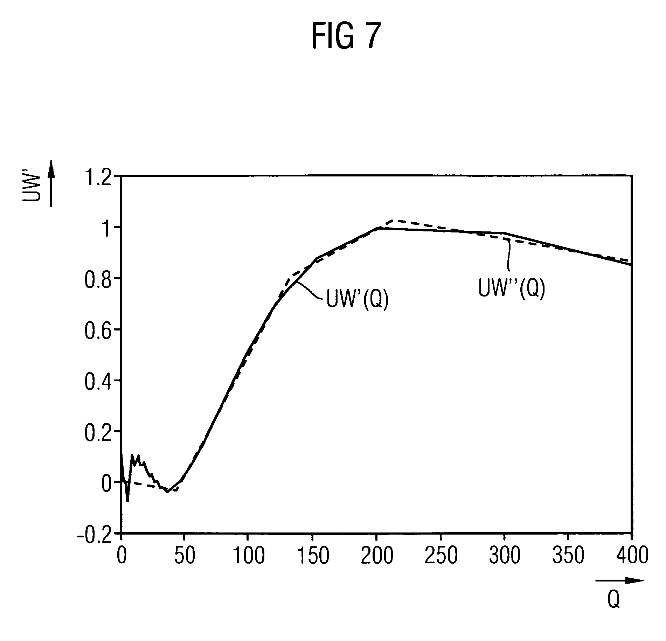

Die Schätzfunktion SF kann auch in Abhängigkeit mehrerer charakteristischer Parameter P gebildet werden. Neben der rechnerischen Ermittlung der Schätzfunktion SF kann auch eine statistische Funktion, wie z.B. eine Laplace-Funktion, verwendet werden, die eine Näherung für eine rechnerisch ermittelte Schätzfunktion darstellt. In Figur 4 ist eine Schätzfunktion SF(Q) in Abhängigkeit des Quantisierungsfaktors Q zu sehen. Diese Schätzfunktion SF(Q) weicht in Figur 4 bei größeren Quantisierungsfaktoren Q von den optimalen Korrekturwerten KW ab. Hierzu kann gemäß einer Erweiterung des Erfindungsgemäßen Verfahren ein Unterschiedswert UW gebildet werden, der diese Differenz charakterisiert, z.B. UW = SF- KW. Figur 7 zeigt eine Funktion an Unterschiedswerten UW in Abhängigkeit des Quantisierungsfaktors Q. Dies ist mit dem Bezugszeichen UW'(Q) gekennzeichnet. Dabei ist der maximale Unterschiedswert zu Eins normiert wiedergegeben. Dieser Unterschiedswert UW, bzw. eine Funktion mit Unterschiedswerten, kann von der Encodiereinheit zur Decodiereinheit übertragen werden und wird dann bei der inversen Quantisierung berücksichtigt, wie beispielsweise bei einem bestimmten Quantisierungsfaktor Q folgt Y = (Z + SF - UW) *Q. Im Beispiel gemäß Figur 3 und 5 wird der Unterschiedswert UW in der ersten Daten JDS1 gespeichert. Im Beispiel gemäß Figur 3 kann die Schätzfunktion SF und/oder der Unterschiedswert UW in der Korrekturwerteinheit KWE ermittelt werden. Im Ausführungsbeispiel gemäß Figur 5 kann die Schätzfunktion SF und/oder der Unterschiedswert UW mit Hilfe der Korrekturwertanaly-

**EP 1 869 890 B1**

seeinheit KWA verarbeitet werden.

Zur Übertragung als auch zur Speicherung der Schätzfunktion SF und/oder der Funktion der Unterschiedswerte UW muss eine größere Datenmenge übermittelt bzw. abgelegt werden. Dies kann beispielsweise in Tabellenform erfolgen. Zur Reduktion dieser Datenmenge kann vor Übertragung bzw. Speicherung eine stückweise Linearisierung der Schätzfunktion und/oder der Funktion der Unterschiedswerte durchgeführt werden. Dies ist in Figur 7 mit der gestrichelten Funktion, gekennzeichnet mit UW" (Q), wiedergegeben. Die Ermittlung der stückweise Linearisierung oder anderer Methoden zur Linearisierung sind beispielsweise dem Kapitel 3 und 4 des Dokuments [3] entnehmbar.

In den bisherigen Ausführungsbeispielen sind positive Werte für die Koeffizienten X bzw. quantisierten Koeffizienten Z benutzt worden. Das erfindungsgemäße Verfahren kann sowohl mit positiven als auch negativen Werten verwendet werden. Daneben kann auch der Korrekturwert KW einen positiven oder negativen Wert annehmen.

Mit Hilfe der Figuren 3 und 5 ist das erfindungsgemäße Verfahren erläutert worden. Im Allgemeinen repräsentiert Figur 5 eine Encodiereinheit JC, welche anstelle eines Bildcodierverfahrens, wie z.B. JPEG, auch andere Kompressionsverfahren wie z.B. ein Videocodierverfahren oder ein Audiocodierverfahren realisieren kann. Stellt die Encodiereinheit EC ein Videocodierverfahren dar, so können anstelle oder nebem dem Quantisierungsfaktor Q auch die Blockgröße BG, zumindest ein Frequenzwert FW oder/und der zeitliche Präditkionsmodus PM als charakteristische Parameter P berücksichtigt werden. Dies ist in Figur 3 mit gestrichelten Linien verdeutlicht. Dies gilt in analoger Weise für Figur 5, wobei im Allgemeinen das Bezugszeichen JD eine Decodiereinheit eines Kompressionsverfahrens repräsentiert.

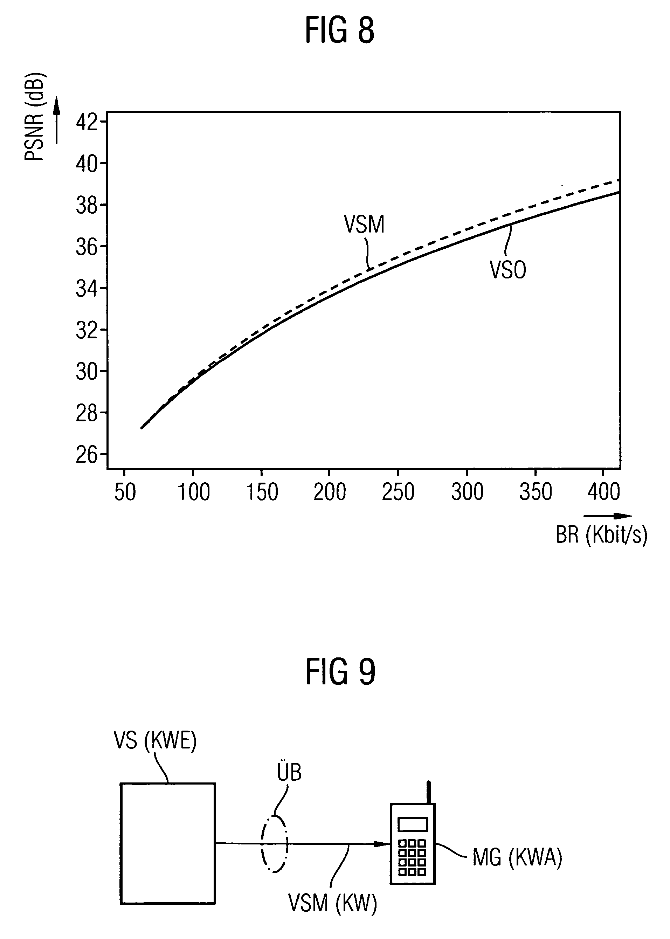

In Figur 8 ist in Abhängigkeit von einer Bitrate BR einer codierten Videosequenz in Kilobit pro Sekunde kbit/s eine Bildqualität PSNR(dB) der codierten Videosequenz abgebildet. Die Bildqualität PSNR(dB) wird in Form des in der Videocodierung bekannten Fehlermaßes PSNR (PSNR=Peak-Signal-Noise-Ratio) gemessen. Je höher der PSNR-Wert desto besser die Bildqualität. Die Funktion mit der durchgezogenen Linie stellt ein codiertes Videosignal VSO einer Videosequenz ohne Verwendung des erfindungsgemäßen Verfahrens dar. Die Funktion mit der gestrichelten Linie zeigt ein optimiertes codiertes videosignal VSM der gleichen Videosequenz wie das codierte Videosignal VSO dar, wobei das erfindungsgemäße Verfahren benutzt worden ist. Da das optimierte codierte Videosignal VSM oberhalb des codierten Videosignals VSO liegt, zeigt das optimierte codierte Videosignal VSM bei gleicher Datenrate BR eine verbesserte Bildqualität. Diese Verbesserung nimmt hierbei bei höheren Datenraten zu.

Figur 9 zeigt ein Videostreaming System, welches einen Videoserver VS und ein mobile Endgerät MG, insbesondere nach GSM-Standard (GSM-Global System for Mobile Communications), umfasst. Der Videoserver VS benutzt neben einem Kompressionsalgorithmus das erfindungsgemäße Verfahren bei der Erstellung des optimierten codierten Videosignals VSM, wobei das erfindungsgemäße Verfahren mittels der Korrekturwerteinheit KWE durchgeführt wird. Das optimierte codierte Videosignal VSM umfasst neben komprimierten Bilddaten einen oder mehrere Korrekturwerte KW. Das optimierte codierte Videosignal VSM wird über einen Übertragungskanal ÜB zum mobilen Endgerät MG übertragen. Dieser Übertragungskanal ÜB wird beispielsweise mittels eines drahtgebundenen Netzes, insbesondere mittels des LAN-Standards (LAN-Local Area Network, oder mittels eines drahtlosen Netzes, insbesondere mittels des WLAN-Standards (WLAN-Wireless Local Area Network) oder des UMTS-Standards (UMTS-Unviversal Mobile Telecommunications System) übermittelt. Das mobile Endgerät MG decodiert das empfangene optimierte codierte Videosignal VSM und setzt das Korrekturwertanalyseeinheit KWA zur Umsetzung des erfindungsgemäßen Verfahrens ein.

Literaturverzeichnis

[1] Shi und Sun, "Image and video compression for multimedia engineering", CRC-Press, 2000

[2] ITU-T und ISO/IEC JTC1, "JSVM 1 Software", JVT-N024, Jan 2005

[3] Prof. Dr.-Ing. E Schrüfer, "Signalverarbeitung", 2. Auflage, 1992, Hanser Verlag, ISBN 3-446-16563

**Patentansprüche**

1. Verfahren zur Reduktion eines Quantisierungsfehlers (QF) bei einer inversen Quantisierung eines quantisierten Koeffizienten (Z) im Rahmen eines Kompressionsverfahrens, wobei der Quantisierungsfehler (QF) einen Unterschied zwischen dem quantisierten Koeffizienten (Z) nach der inversen Quantisierung und einem dazugehörigen Koeffizienten (X) vor einer Quantisierung beschreibt,
**dadurch gekennzeichnet, dass**

- mindestens ein für die Kompression des quantisierten Koeffizienten (Z) charakteristischer Parameter (P) ausgewählt wird, wobei der charakteristische Parameter (P) bzw. die charakteristischen Parameter (P) unterschiedlich zu einem zeitlichen Prädiktionsmodus (PM) sind,
- in Abhängigkeit des zumindest einen ausgewählten charakteristischen Parameters (P) ein Korrekturwert (KW) selektiert wird,
- die inverse Quantisierung nach Addition des Korrekturwerts (KW) und des quantisierten Koeffizienten (Z) ausgeführt wird,
- als charakteristischer Parameter (P) eine Blockgröße (BG) berücksichtigt wird, wobei ein Block mehrere quantisierte Koeffizienten beinhaltet und dieser Block mit der Blockgröße (BG) den quantisierten Koeffizient (Z) umfasst.

2. Verfahren zur Reduktion eines Quantisierungsfehlers (QF) bei einer inversen Quantisierung eines quantisierten Koeffizienten (Z) im Rahmen eines Kompressionsverfahrens, wobei der Quantisierungsfehler (QF) einen Unterschied zwischen dem quantisierten Koeffizienten (Z) nach der inversen Quantisierung und einem dazugehörigen Koeffizienten (X) vor einer Quantisierung beschreibt, **dadurch gekennzeichnet, dass**

- mindestens zwei für die Kompression des quantisierten Koeffizienten (Z) charakteristische Parameter (P) ausgewählt werden, wobei einer der beiden charakteristischen Parameter (P) einem zeitlichen Prädiktionsmodus (PM) entspricht,
- in Abhängigkeit des zumindest einen ausgewählten charakteristischen Parameters (P) ein Korrekturwert (KW) selektiert wird,
- die inverse Quantisierung nach Addition des Korrekturwerts (KW) und des quantisierten Koeffizienten (Z) ausgeführt wird,
- als charakteristischer Parameter (P) eine Blockgröße (BG) berücksichtigt wird, wobei ein Block mehrere quantisierte Koeffizienten beinhaltet und dieser Block mit der Blockgröße (BG) den quantisierten Koeffizient (Z) umfasst.

3. Verfahren nach Anspruch 1 oder 2,
**dadurch gekennzeichnet, dass**
als charakteristischer Parameter (P) der quantisierte Koeffizient (Z) berücksichtigt wird.

4. Verfahren nach einem der vorhergehenden Ansprüche,
**dadurch gekennzeichnet, dass**
als charakteristischer Parameter (P) ein Quantisierungsfaktor (Q) berücksichtigt wird.

5. Verfahren nach einem der vorhergehenden Ansprüche,
**dadurch gekennzeichnet, dass**
als charakteristischer Parameter (P) zumindest ein Frequenzwert (FW) berücksichtigt wird, wobei der quantisierte Koeffizient (Z) eine Amplitude des zumindest einen Frequenzwerts (FW) repräsentiert.

6. Verfahren nach Anspruch 2,
**dadurch gekennzeichnet, dass**
als charakteristischer Parameter (P) der zeitliche Prädiktionsmodus (PM), insbesondere ein INTRA-Prädiktionsmodus (PM_INTRA), ein INTER-Prädiktionsmodus (PM_INTER) und/oder ein RESIDUAL-Präditionsmodus (PM_RES), berücksichtigt wird.

7. Verfahren nach einem der vorhergehenden Ansprüche,
**dadurch gekennzeichnet, dass**
eine Schätzfunktion (SF) in Abhängigkeit von mindestens einem charakteristischen Parameter (P) für zumindest einen Korrekturwert (KW), insbesondere auf Basis zumindest einer Testsequenz, erzeugt und im Kompressionsverfahren der Korrekturwert (KW) mittels der Schätzfunktion (SF) ermittelt wird.

8. Verfahren nach Anspruch 7,
**dadurch gekennzeichnet, dass**
eine jeweilige Schätzfunktion (SF) für mindestens zwei charakteristische Parameter (P) eingesetzt wird, wobei die jeweiligen Schätzfunktionen (SF) unterschiedlich sind.

9. Verfahren nach Anspruch 7 oder 8,
**dadurch gekennzeichnet, dass**

als Schätzfunktion (SF) eine Laplace-Funktion verwendet wird.

10. Verfahren nach einem der vorhergehenden Ansprüche 7-9,
**dadurch gekennzeichnet, dass**
der Korrekturwert (KW) mit einer anderen Methode als der Schätzfunktion ermittelt, unter Verwendung einer Schätzfunktion (SF) ein Schätzwert für den Korrekturwert (KW) generiert, ein Unterschiedswert (UW) aus Korrekturwert (KW) und Schätzwert (SW) erzeugt und der erzeugte Unterschiedswerts (UW) von einer Encodiereinrichtung des Kompressionsverfahrens an eine Decodiervorrichtung des Kompressionsverfahrens übermittelt wird.

11. Verfahren nach Anspruch 10,
**dadurch gekennzeichnet, dass**
mehrere Korrekturwerte (KW) oder Unterschiedswerte (UW) von einer Encodiereinrichtung des Kompressionsverfahrens an eine Decodiervorrichtung des Kompressionsverfahrens übermittelt werden.

12. Verfahren nach Anspruch 10 oder 11,
**dadurch gekennzeichnet, dass**
vor der Übertragung eine stückweise Linearisierung der Korrekturwerte (KW) und/oder Unterschiedswerte (UW) in Abhängigkeit des zumindest einen charakteristischen Parameters (P) durchgeführt wird.

13. Verfahren nach einem der vorhergehenden Ansprüche,
**dadurch gekennzeichnet, dass**
aufgrund der Auswahl mindestens eines charakteristischen Parameters (P) ein Korrekturwert (KW) derart ermittelt wird, dass der Quantisierungsfehler (QF) einer Koeffizientengruppe (G) quantisierter Koeffizienten (Zn) mit den charakteristischen Parametern (P) der Auswahl minimiert wird, wobei die jeweilige inverse Quantisierung nach einer Addition des Korrekturwerts (KW) und des quantisierten Koeffizienten (Zn) der Koeffizientengruppe (G) erfolgt.

14. Verfahren nach Anspruch 13,
**dadurch gekennzeichnet, dass**
eine Koeffizientengruppe (G) zu einem Zeitpunkt neu erstellt wird, wobei dieser Zeitpunkt durch fest vorgegebene Zeitpunkte (T0) oder einer Anzahl bereits quantisierter Koeffizienten (Z) bestimmt wird.

15. Verfahren nach Anspruch 13 oder 14,
**dadurch gekennzeichnet, dass**
als Kompressionsverfahren ein Videocodierverfahren ausgewählt und die Koeffizientengruppe (G) der quantisierten Koeffizienten (Zn) in zumindest aus einem Bildblock (BB) oder zumindest einer Gruppe von Bildblöcken (GOB) oder zumindest einem Bild (IM) entnommen wird.

16. Verfahren nach einem der vorhergehenden Ansprüche,
**dadurch gekennzeichnet, dass**
als Kompressionsverfahren ein Videocodierverfahren, insbesondere nach H.264 Standard, ausgewählt wird.

17. Vorrichtung zur Reduktion eines Quantisierungsfehlers (QF) bei einer inversen Quantisierung eines quantisierten Koeffizienten (Z) im Rahmen eines Kompressionsverfahrens, wobei der Quantisierungsfehler (QF) einen Unterschied zwischen dem quantisierten Koeffizienten (Z) nach der inversen Quantisierung und einem dazugehörigen Koeffizienten (X) vor einer Quantisierung beschreibt, insbesondere nach einem der vorhergehenden Ansprüche,
**gekennzeichnet durch**,
eine Korrekturwerteinheit (KWE) die derart ausgestaltet ist, dass

- mindestens ein für die Kompression des quantisierten Koeffizienten (Z) charakteristischer Parameter (P) ausgewählt wird, wobei der charakteristischen Parameter (P) bzw. die charakteristischen Parameter (P) unterschiedlich zu einem zeitlichen Prädiktionsmodus (PM) sind,
- in Abhängigkeit des zumindest einen ausgewählten charakteristischen Parameters (P) ein Korrekturwert (KW) selektiert wird,
- die inverse Quantisierung nach Addition des Korrekturwerts (KW) und des quantisierten Koeffizienten (Z) ausgeführt wird,
- als charakteristischer Parameter (P) eine Blockgröße (BG) berücksichtigt wird, wobei ein Block mehrere quantisierte Koeffizienten beinhaltet und dieser Block mit der Blockgröße (BG) den quantisierten Koeffizient (Z) umfasst.

**18.** Vorrichtung zur Reduktion eines Quantisierungsfehlers (QF) bei einer inversen Quantisierung eines quantisierten Koeffizienten (Z) im Rahmen eines Kompressionsverfahrens, wobei der Quantisierungsfehler (QF) einen Unterschied zwischen dem quantisierten Koeffizienten (Z) nach der inversen Quantisierung und einem dazugehörigen Koeffizienten (X) vor einer Quantisierung beschreibt, insbesondere nach einem der vorhergehenden Ansprüche, **gekennzeichnet durch**, eine Korrekturwerteinheit (KWE) die derart ausgestaltet ist, dass

- mindestens zwei für die Kompression des quantisierten Koeffizienten (Z) charakteristische Parameter (P) ausgewählt werden, wobei einer der beiden charakteristischen Parameter (P) einem zeitlichen Prädiktionsmodus (PM) entspricht,
- in Abhängigkeit des zumindest einen ausgewählten charakteristischen Parameters (P) ein Korrekturwert (KW) selektiert wird,
- die inverse Quantisierung nach Addition des Korrekturwerts (KW) und des quantisierten Koeffizienten (Z) ausgeführt wird,
- als charakteristischer Parameter (P) eine Blockgröße (BG) berücksichtigt wird, wobei ein Block mehrere quantisierte Koeffizienten beinhaltet und dieser Block mit der Blockgröße (BG) den quantisierten Koeffizient (Z) umfasst.

**19.** Vorrichtung gemäß Anspruch 17 oder 18, **gekennzeichnet durch**, eine Korrekturwertanalyseeinheit (KWA), die derart ausgestaltet ist, dass aufgrund der Auswahl mindestens eines charakteristischen Parameters (P) ein Korrekturwert (KW) derart ermittelt wird, dass der Quantisierungsfehler (QF) einer Koeffizientengruppe (G) quantisierter Koeffizienten (Zn) mit den charakteristischen Parametern (P) der Auswahl minimiert wird, wobei die jeweilige inverse Quantisierung nach einer Addition des Korrekturwerts (KW) und des quantisierten Koeffizienten (Zn) der Koeffizientengruppe (G) erfolgt.

**Claims**

**1.** Method for reducing a quantisation error (QF) in an inverse quantisation of a quantised coefficient (Z) during a compression method, the quantisation error (QF) describing a difference between the quantised coefficient (Z) after inverse quantisation and an associated coefficient (X) before quantisation, **characterised in that**

- at least one parameter (P) that is characteristic of the compression of the quantised coefficient (Z) is selected, the characteristic parameter (P) or the characteristic parameter (P) being different to a temporal prediction mode (PM),
- a correction value (KW) is selected as a function of the at least one selected characteristic parameter (P),
- the inverse quantisation takes place after the correction value (KW) has been added to the quantised coefficient (Z),
- a block size (BG) is taken into consideration as a characteristic parameter (P), wherein a block comprises a plurality of quantised coefficients and this block with the block size (BG) comprises the quantised coefficient (Z).

**2.** Method for reducing a quantisation error (QF) in an inverse quantisation of a quantised coefficient (Z) during a compression method, the quantisation error (QF) describing a difference between the quantised coefficient (Z) after inverse quantisation and an associated coefficient (X) before quantisation, **characterised in that**

- at least two parameters (P) that are characteristic of the compression of the quantised coefficient (Z) are selected, one of the two characteristic parameters (P) corresponding to a temporal prediction mode (PM),
- a correction value (KW) is selected as a function of the at least one selected characteristic parameter (P),
- the inverse quantisation takes place after the correction value (KW) has been added to the quantised coefficient (Z),
- a block size (BG) is taken into consideration as a characteristic parameter (P), wherein a block comprises a plurality of quantised coefficients and this block with the block size (BG) comprises the quantised coefficient (Z).

**3.** Method according to claim 1 or 2, **characterised in that**

the quantised coefficient (Z) is taken into consideration as a characteristic parameter (P).

4. Method according to one of the preceding clams,
**characterised in that**
a quantisation factor (Q) is taken into consideration as a characteristic parameter (P).

5. Method according to one of the preceding claims,
**characterised in that** at least one frequency value (FW) is taken into consideration as the characteristic parameter (P), the quantised coefficient (Z) representing an amplitude of the at least one frequency value (FW).

6. Method according to claim 2, **characterised in that** the temporal prediction mode (PM), in particular an INTRA prediction mode (PM_INTRA), an INTER prediction mode (PM_INTER) and/or a RESIDUAL prediction mode (PM_ RES), is taken into consideration as the characteristic parameter (P).

7. Method according to one of the preceding claims,
**characterised in that** an estimator (SF) is produced as a function of at least one characteristic parameter (P) for at least one correction value (KW), in particular on the basis of at least one test sequence, and the correction value (KW) is determined in the compression technique by means of the estimator (SF).

8. Method according to claim 7, **characterised in that** a respective estimator (SF) is used for at least two characteristic parameters (P), wherein the respective estimators (SF) are different.

9. Method according to claim 7 or 8, **characterised in that** a Laplace function is used as the estimator (SF).

10. Method according to one of the preceding claims 7 - 9, **characterised in that** the correction value (KW) is determined by a method different to the estimator, by using an estimator (SF) an estimate is generated for the correction value (KW), a differential (UW) is produced from the correction value (KW) and estimate (SW) and the produced differential (UW) is transmitted from a encoding device of the compression method to a decoding device of the compression method.

11. Method according to claim 10, **characterised in that** a plurality of correction values (KW) or differentials (UW) is transmitted from an encoding device of the compression method to a decoding device of the compression method.

12. Method according to claim 10 or 11, **characterised in that** before transmission, piece-wise linearisation of the correction value (KW) and/or differentials (UW) is carried out as a function of the at least one characteristic parameter (P).

13. Method according to one of the preceding claims, **characterised in that** on the basis of the selection of at least one characteristic parameter (P) a correction value (KW) is determined in such a way that the quantisation error (QF) of a coefficient group (G) of quantised coefficients (Zn) is minimised by the characteristic parameters (P) of the selection, the respective inverse quantisation taking place after the correction value (KW) has been added to the quantised coefficient (Zn) of the coefficient group (G).

14. Method according to claim 13, **characterised in that** a coefficient group (G) is recreated at an instant, this instant being determined by strictly predefined instants (T0) or a number of already quantised coefficients (Z).

15. Method according to claim 13 or 14, **characterised in that** a video encoding method is selected as the compression technique and the coefficient group (G) of the quantised coefficient (Zn) is taken at least from one image block (BB) or at least one group of image blocks (GOB) or at least one image (IM).

16. Method according to one of the preceding claims, **characterised in that** a video encoding method, in particular to the H.264 standard, is selected as the compression method.

17. Device for reducing a quantisation error (QF) in an inverse quantisation of a quantised coefficient (Z) during a compression method, the quantisation error (QF) describing a difference between the quantised coefficient (Z) after inverse quantisation and an associated coefficient (X) before quantisation, in particular according to any one of the preceding claims,
**characterised by**

a correction value unit (KWE) which is configured in such a way that

- at least one parameter (P) that is characteristic of the compression of the quantised coefficient (Z) is selected, wherein the characteristic parameter (P) or the characteristic parameter (P) are different from a temporal prediction mode (PM),
- a correction value (KW) is selected as a function of the at least one selected characteristic parameter (P),
- the inverse quantisation takes place after the correction value (KW) has been added to the quantised coefficient (Z),
- a block size (BG) is taken into consideration as a characteristic parameter (P), wherein a block comprises a plurality of quantised coefficients and this block with the block size (BG) comprises the quantised coefficient (Z).

18. Device for reducing a quantisation error (QF) in an inverse quantisation of a quantised coefficient (Z) during a compression method, the quantisation error (QF) describing a difference between the quantised coefficient (Z) after inverse quantisation and an associated coefficient (X) before quantisation, in particular according to any one of the preceding claims,
**characterised by**
a correction value unit (KWE) which is configured in such a way that

- at least two parameters (P) that are characteristic of the compression of the quantised coefficient (Z) are selected, one of the two characteristic parameter (P) corresponding to a temporal prediction mode (PM),
- a correction value (KW) is selected as a function of the at least one selected characteristic parameter (P),
- the inverse quantisation takes place after the correction value (KW) has been added to the quantised coefficient (Z),
- a block size (BG) is taken into consideration as a characteristic parameter (P), wherein a block comprises a plurality of quantised coefficients and this block with the block size (BG) comprises the quantised coefficient (Z).

19. Device according to claim 17 or 18,
**characterised by**
a correction value analysis unit (KWA) which is configured in such a way that on the basis of the selection of at least one characteristic parameter (P) a correction value (KW) is determined in such a way that the quantisation error (QF) of a coefficient group (G) of quantised coefficients (Zn) is minimised by the characteristic parameters (P) of the selection, the respective inverse quantisation taking place after the correction value (KW) has been added to the quantised coefficient (Zn) of the coefficient group (G).

**Revendications**

1. Procédé de réduction d'une erreur de quantification (QF) dans une quantification inverse d'un coefficient quantifié (Z) dans le cadre d'un procédé de compression, laquelle erreur de quantification (QF) décrit une différence entre le coefficient quantifié (Z) après la quantification inverse et un coefficient associé (X) avant une quantification,
**caractérisé en ce que**

- on sélectionne au moins un paramètre (P) caractéristique du coefficient quantifié (Z), étant précisé que le ou les paramètres caractéristiques (P) sont différents d'un mode de prédiction (PM) temporel,
- on sélectionne une valeur de correction (KW) en fonction dudit au moins un paramètre caractéristique (P) sélectionné,
- on opère la quantification inverse après addition de la valeur de correction (KW) et du coefficient quantifié (Z),
- on considère comme paramètre caractéristique (P) une taille de bloc (BG), étant précisé qu'un bloc contient plusieurs coefficients quantifiés et que ce bloc englobe avec la taille de bloc (BG) le coefficient quantifié (Z).

2. Procédé de réduction d'une erreur de quantification (QF) dans une quantification inverse d'un coefficient quantifié (Z) dans le cadre d'un procédé de compression, laquelle erreur de quantification (QF) décrit une différence entre le coefficient quantifié (Z) après la quantification inverse et un coefficient associé (X) avant une quantification,
**caractérisé en ce que**

- on sélectionne au moins deux paramètres caractéristiques (P) du coefficient quantifié (Z), étant précisé que l'un des deux paramètres caractéristiques (P) est conforme à un mode de prédiction (PM) temporel,
- on sélectionne une valeur de correction (KW) en fonction du au moins un paramètre caractéristique (P) sélectionné,

- on opère la quantification inverse après addition de la valeur de correction (KW) et du coefficient quantifié (Z),
- on considère comme paramètre caractéristique (P) une taille de bloc (BG), étant précisé qu'un bloc contient plusieurs coefficients quantifiés et que ce bloc englobe avec la taille de bloc (BG) le coefficient quantifié (Z).

3. Procédé selon la revendication 1 ou 2,
   **caractérisé en ce que**
   on considère comme paramètre caractéristique (P) le coefficient quantifié (Z).

4. Procédé selon l'une des revendications précédentes,
   **caractérisé en ce que**
   on considère comme paramètre caractéristique (P) un facteur de quantification (Q).

5. Procédé selon l'une des revendications précédentes,
   **caractérisé en ce que**
   on considère comme paramètre caractéristique (P) au moins une valeur de fréquence (FW), étant précisé que le coefficient quantifié (Z) représente une amplitude de ladite au moins une valeur de fréquence (FW).

6. Procédé selon la revendication 2,
   **caractérisé en ce que**
   on considère comme paramètre caractéristique (P) le mode de prédiction (PM) temporel, en particulier un mode de prédiction INTRA (PM_INTRA), un mode de prédiction INTER (PM_INTER) et/ou un mode de prédiction RESIDUAL (PM_RES).

7. Procédé selon l'une des revendications précédentes,
   **caractérisé en ce que**
   on établit une fonction d'estimation (SF) en fonction d'au moins un paramètre (P) caractéristique d'au moins une valeur de correction (KW), en particulier sur la base d'au moins une séquence de test, et on détermine la valeur de correction (KM) à l'aide de la fonction d'estimation (SF) dans le procédé de compression.

8. Procédé selon la revendication 7,
   **caractérisé en ce que**
   on utilise une fonction d'estimation (SF) respective pour au moins deux paramètres caractéristiques (P), étant précisé que les fonctions d'estimation (SF) respectives sont différentes.

9. Procédé selon la revendication 7 ou 8,
   **caractérisé en ce que**
   on utilise comme fonction d'estimation (SF) une fonction de Laplace.

10. Procédé selon l'une des revendications précédentes 7 à 9,
    **caractérisé en ce que**
    on détermine la valeur de correction (KW) par une autre méthode, on génère une valeur estimative de la valeur de correction (KW) à l'aide d'une fonction d'estimation (SF), on détermine une valeur différentielle (UW) à partir de la valeur de correction (KW) et la valeur estimative (SW), et on transfère la valeur différentielle (UW) déterminée d'un dispositif d'encodage du procédé de compression à un dispositif de décodage du procédé de compression.

11. Procédé selon la revendication 10,
    **caractérisé en ce que**
    on transfère plusieurs valeurs de correction (KW) ou valeurs différentielles (UW) d'un dispositif d'encodage du procédé de compression à un dispositif de décodage du procédé de compression.

12. Procédé selon la revendication 10 ou 11,
    **caractérisé en ce que**
    avant la transmission, on opère une linéarisation par morceaux des valeurs de correction (KW) et/ou valeurs différentielles (UW) en fonction du au moins un paramètre caractéristique (P).

13. Procédé selon l'une des revendications précédentes,
    **caractérisé en ce que**

du fait de la sélection d'au moins un paramètre caractéristique (P), on détermine une valeur de correction (KW) de façon que l'erreur de quantification (QF) d'un groupe de coefficients (G) composé de coefficients quantifiés (Zn) soit minimisée par les paramètres caractéristiques (P) de la sélection, étant précisé que la quantification inverse respective a lieu après addition de la valeur de correction (KW) et du coefficient quantifié (Zn) du groupe de coefficients (G).

14. Procédé selon la revendication 13,
    **caractérisé en ce que**
    on reforme un groupe de coefficients (G) à un moment, ce moment étant défini par des moments imposés (T0) ou un nombre de coefficients (Z) déjà quantifiés.

15. Procédé selon la revendication 13 ou 14,
    **caractérisé en ce que**
    on choisit comme procédé de compression un procédé de vidéocodage et on extrait le groupe de coefficients (G) composé des coefficients quantifiés (Zn) d'au moins un bloc d'image (BB) ou d'au moins un groupe de blocs d'image (GOB) ou d'au moins une image (IM).

16. Procédé selon l'une des revendications précédentes,
    **caractérisé en ce que**
    on choisit comme procédé de compression un procédé de vidéocodage, en particulier selon le standard H.264.

17. Dispositif de réduction d'une erreur de quantification (QF) dans une quantification inverse d'un coefficient quantifié (Z) dans le cadre d'un procédé de compression, laquelle erreur de quantification (QF) décrit une différence entre le coefficient quantifié (Z) après la quantification inverse et un coefficient associé (X) avant une quantification, en particulier selon l'une des revendications précédentes,
    **caractérisé par**
    une unité à valeur de correction (KWE), qui est configurée de telle sorte que

    - on sélectionne au moins un paramètre (P) caractéristique du coefficient quantifié (Z), étant précisé que le ou les paramètres caractéristiques (P) sont différents d'un mode de prédiction (PM) temporel,
    - on sélectionne une valeur de correction (KW) en fonction dudit au moins un paramètre caractéristique (P) sélectionné,
    - on opère la quantification inverse après addition de la valeur de correction (KW) et du coefficient quantifié (Z),
    - on considère comme paramètre caractéristique (P) une taille de bloc (BG), étant précisé qu'un bloc contient plusieurs coefficients quantifiés et que ce bloc englobe avec la taille de bloc (BG) le coefficient quantifié (Z).

18. Dispositif de réduction d'une erreur de quantification (QF) dans une quantification inverse d'un coefficient quantifié (Z) dans le cadre d'un procédé de compression, laquelle erreur de quantification (QF) décrit une différence entre le coefficient quantifié (Z) après la quantification inverse et un coefficient associé (X) avant une quantification, en particulier selon l'une des revendications précédentes,
    **caractérisé par**
    une unité à valeur de correction (KWE), qui est configurée de telle sorte que

    - on sélectionne au moins deux paramètres (P) caractéristiques du coefficient quantifié (Z), étant précisé que l'un des deux paramètres caractéristiques (P) est conforme à un mode de prédiction (PM) temporel,
    - on sélectionne une valeur de correction (KW) en fonction du au moins un paramètre caractéristique (P) sélectionné,
    - on opère la quantification inverse après addition de la valeur de correction (KW) et du coefficient quantifié (Z),
    - on considère comme paramètre caractéristique (P) une taille de bloc (BG), étant précisé qu'un bloc contient plusieurs coefficients quantifiés et que ce bloc englobe avec la taille de bloc (BG) le coefficient quantifié (Z).

19. Dispositif selon la revendication 17 ou 18,
    **caractérisé par**
    une unité à valeur de correction (KWE), qui est configurée de telle sorte que du fait de la sélection d'au moins un paramètre caractéristique (P), on détermine une valeur de correction (KW) de façon que l'erreur de quantification (QF) d'un groupe de coefficients (G) composé de coefficients quantifiés (Zn) soit minimisée par les paramètres caractéristiques (P) de la sélection, étant précisé que la quantification inverse respective a lieu après addition de la valeur de correction (KW) et du coefficient quantifié (Zn) du groupe de coefficients (G).

## FIG 1
### Stand der Technik

## FIG 2
### Stand der Technik

# FIG 3

EP 1 869 890 B1

# FIG 4

FIG 5

# FIG 6

# FIG 7

# FIG 8

# FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SHI ; SUN.** Image and video compression for multimedia engineering. CRC-Press, 2000
- JSVM 1 Software. *ITU-T und ISO/IEC JTC1,* Januar 2005
- **E SCHRÜFER.** Signalverarbeitung. Hanser Verlag, 1992